# EUROPEAN PATENT APPLICATION

(11) **EP 4 478 503 A1**
(43) Date of publication of application: **18.12.2024**
(21) Application number: 24174893.8
(22) Date of filing: 08.05.2024
(51) Int. Cl.: H01M 50/207, H01M 50/231, H01M 50/233, A62C 3/16, B65D 88/12, B65D 90/04

(54) **CABINET**

(30) Priority: 09.05.2023 TW 112117227
(71) Applicant: TCC Energy Storage Technology Corporation, Taipei City 104414 (TW)
(72) Inventor: CHANG, An-Ping, 104414 TAIPEI CITY (TW)
(74) Representative: Maiwald GmbH

(57) **Abstract**

The present disclosure provides a cabinet for an energy storage apparatus. The cabinet includes a concrete main body, a heat resistant layer, and a flame retardant layer. The concrete main body includes a plurality of walls to form an accommodating space. The heat resistant layer is disposed on one or more inner surfaces of the plurality of walls in the accommodating space. The flame retardant layer is disposed on the heat resistant layer and exposed to the accommodating space. A volumetric density of the heat resistant layer is lower than a volumetric density of the flame retardant layer.

## Description

### BACKGROUND OF THE INVENTION

### 1. Field of the Invention

The present disclosure substantially relates to a cabinet. More specifically, the present disclosure relates to a cabinet for an energy storage apparatus.

### 2. Description of the Related Art

To improve efficiency and flexibility of energy use, developments of energy storage apparatuses have become a trend in recent years. With the developments and maturity of battery technologies (such as lithium batteries), battery energy storage apparatuses have become one of the mainstream energy storage apparatuses. Considerations such as ease of loading and transportation and weather resistance have led metal containers commonly used in international shipping being currently popular for energy storage.

However, during the storage or transportation of batteries, various factors (such as overcharging, impacts, electrical control system errors, defects in the operating environment or process) can damage the separator in the batteries. Consequently, the anode is in contact with the cathode to form a short circuit. As a result, a high-temperature chemical reaction occurs, and thereby combustible organic components in the battery is ignited. The high temperature generated by the thermal runaway of the battery may further cause damages to devices adjacent to the battery energy storage apparatus and occurrence of fire accidents.

### SUMMARY OF THE INVENTION

In one or more embodiments, a cabinet for an energy storage apparatus includes a concrete main body, a heat resistant layer, and a flame retardant layer. The concrete main body includes a plurality of walls to form an accommodating space. The heat resistant layer is disposed on one or more inner surfaces of the plurality of walls in the accommodating space. The flame retardant layer is disposed on the heat resistant layer and exposed to the accommodating space. A volumetric density of the heat resistant layer is lower than a volumetric density of the flame retardant layer.

In one or more embodiments, a cabinet for an energy storage apparatus includes a concrete main body, a heat resistant layer, and a flame retardant layer. The concrete main body includes a plurality of walls to form an accommodating space. The heat resistant layer is disposed on one or more inner surfaces of the plurality of walls in the accommodating space. The flame retardant layer is disposed on the heat resistant layer and exposed to the accommodating space. The flame retardant layer includes a plurality of flame retardant plates continuously connected to each other, and at least one connection interface between the flame retardant plates is a non-planar surface.

In one or more embodiments, a cabinet for an energy storage apparatus includes a cabinet and at least one battery system. The cabinet includes a concrete main body, a heat resistant layer, and a flame retardant layer. The concrete main body includes a plurality of walls to form an accommodating space. The heat resistant layer is disposed on one or more inner surfaces of the plurality of walls in the accommodating space. The flame retardant layer is disposed on the heat resistant layer and exposed to the accommodating space. A volumetric density of the heat resistant layer is lower than a volumetric density of the flame retardant layer. The battery system is fixedly connected to the cabinet.

### BRIEF DESCRIPTION OF THE DRAWINGS

When the present disclosure is read in combination with accompanying drawings, a form of the present disclosure can be better understood according to the following implementations. It should be noted that various features may not be drawn to scale, and sizes of various features may be arbitrarily enlarged or reduced to clearly describe the present disclosure.
FIG. 1A is a schematic diagram of a cabinet according to some embodiments of the present disclosure;
FIG. 1B is a cross-sectional view of a cabinet according to some embodiments of the present disclosure;
FIG. 2A is a partial cross-sectional view of a cabinet according to some embodiments of the present disclosure;
FIG. 2B is a partial cross-sectional view of a cabinet according to some embodiments of the present disclosure;
FIG. 3A is a partial cross-sectional view of a cabinet according to some embodiments of the present disclosure;
FIG. 3B is a partial schematic diagram of a cabinet according to some embodiments of the present disclosure;
FIG. 3C is a partial cross-sectional view of a cabinet according to some embodiments of the present disclosure;
FIG. 4A is a partial schematic diagram of a cabinet according to some embodiments of the present disclosure;
FIG. 4B is a partial exploded view of a cabinet according to some embodiments of the present disclosure;
FIG. 4C is a partial exploded view of a cabinet according to some embodiments of the present disclosure;
FIG. 4D is a partial cross-sectional view of a cabinet according to some embodiments of the present disclosure;
FIG. 5A is a schematic diagram of a battery system according to some embodiments of the present disclosure;
FIG. 5B is a schematic diagram of a battery pack according to some embodiments of the present disclosure;
FIG. 6A is a perspective view of an energy storage apparatus according to some embodiments of the present disclosure;
FIG. 6B is a perspective view of an energy storage apparatus according to some embodiments of the present disclosure;
FIG. 7A is an exploded view of a door of a cabinet according to some embodiments of the present disclosure;
FIG. 7B is a partial cross-sectional view of a door of a cabinet according to some embodiments of the present disclosure; and
FIG. 8 is a schematic diagram of a back temperature measurement location according to some embodiments of the present disclosure.

The same or similar components in the drawings and implementations of the present disclosure are denoted by the same symbols.

### PREFERRED EMBODIMENT OF THE PRESENT INVENTION

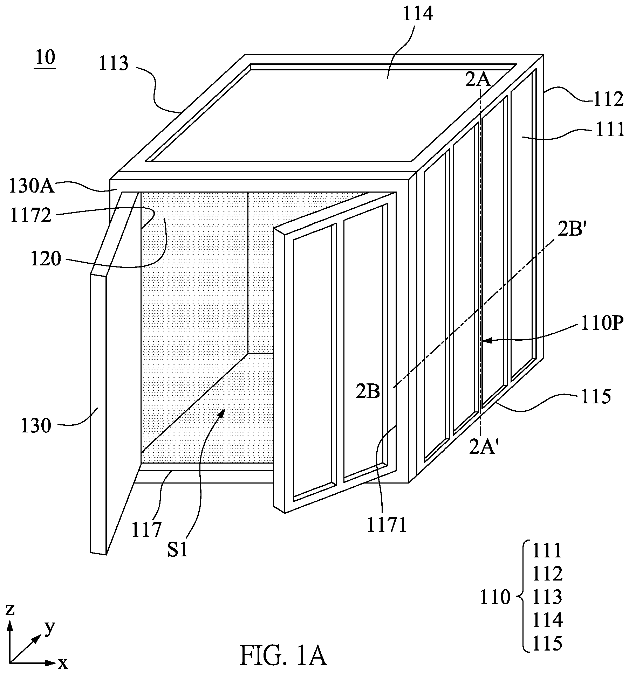

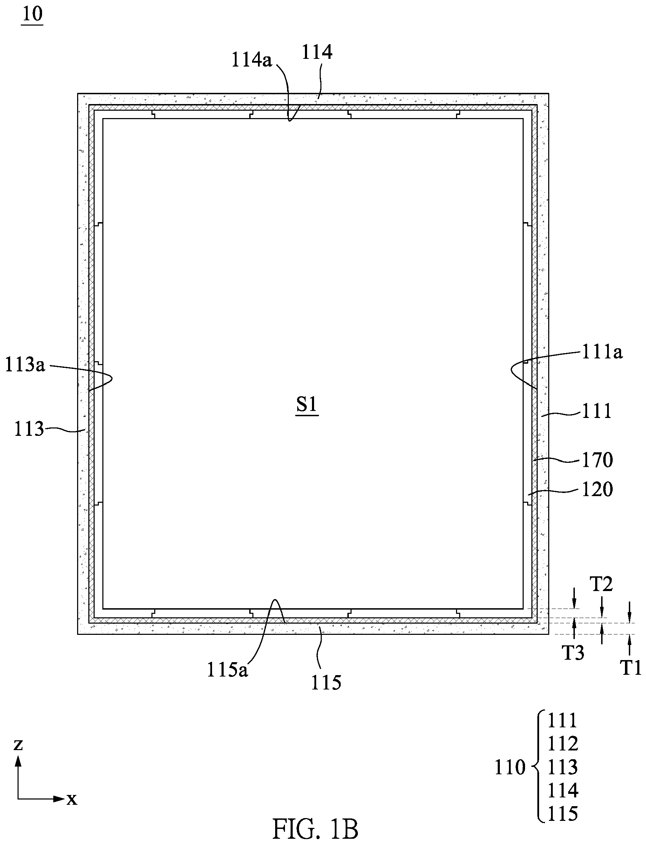

FIG. 1A is a schematic diagram of a cabinet 10 according to some embodiments of the present disclosure, and FIG. 1B is a cross-sectional view of the cabinet 10 according to some embodiments of the present disclosure. In some embodiments, FIG. 1B represents a cross-sectional view along an x direction of the structure in FIG. 1A. The cabinet 10 includes a concrete main body 110, a flame retardant layer 120, a heat resistant layer 170, and a door 130. In addition, for clarity of presentation and description, some components (for example, the door 130) are omitted and not shown in FIG. 1B.

The concrete main body 110 may include a plurality of walls (for example, walls 111, 112, 113, 114, and 115) to form an accommodating space S1. In some embodiments, a size of the accommodating space S1 may allow an operator to enter the accommodating space and maintain and/or operate functional components or devices disposed in the accommodating space S1. In some embodiments, the wall 111, the wall 112, and the wall 113 of the concrete main body 110 may be side walls, the wall 114 may be a top plate, and the wall 115 may be a bottom plate. In some embodiments, each of the wall 111, the wall 112, the wall 113, the wall 114, and the wall 115 has a thickness T1 less than or equal to about 5 centimeters. In some embodiments, each of the wall 111, the wall 112, the wall 113, the wall 114, and the wall 115 has a thickness T1 less than or equal to about 4 centimeters, 3.5 centimeters, 3 centimeters, or 2.5 centimeters. In some embodiments, as shown in FIG. 1A and FIG. 1B, the wall 111, each of the wall 112, the wall 113, the wall 114, and the wall 115 may have a non-plate-like structure. In some embodiments, the concrete main body 110 may include a protruding structure 110P protruding from at least one outer surface of the plurality of walls (for example, the wall 111, the wall 112, the wall 113, the wall 114, and the wall 115). For example, outer surfaces of the wall 111, the wall 112, and the wall 113 have protruding rib structures. In some embodiments, outer surfaces of one or more of the wall 111, the wall 112, the wall 113, the wall 114, and the wall 115 may the same or different special three-dimensional shapes, for example, a wavy structure, a hole structure, a groove structure, a protruding rib structure, or other arbitrary shapes. In some embodiments, one or more of the wall 111, the wall 112, the wall 113, the wall 114, and the wall 115 may have plate-like structures. For example, the outer surfaces of the wall 111, the wall 112, the wall 113, the wall 114, and the wall 115 may be substantially flat surfaces.

In some embodiments, the concrete main body 110 may include synthetic fibers. In some embodiments, a length of the synthetic fiber is about 4 millimeters (mm) to about 20 millimeters, and a diameter of the synthetic fiber is about 0.2 millimeters. In some embodiments, a content of the synthetic fibers in the concrete main body 110 is about 30 kg/m³ to about 60 kg/m³. The synthetic fibers may enhance the bending strength of the concrete main body 110. In some embodiments, the concrete main body 110 is formed of an ultra-high performance concrete (UHPC).

According to some embodiments of the present disclosure, with the concrete main body 110 including the aforesaid synthetic fibers and/or being formed of an UHPC, the concrete main body 110 can have an excellent bending resistance without requiring a reinforcement structure (e.g., a reinforcement cage and/or a reinforcement assembly formed from a plurality of stirrups) to be mixed within the walls of the concrete main body 110.In addition, because the concrete main body 110 has relatively high compressive strength, the concrete main body 110 may have a relatively small wall thickness. In some embodiments, the cabinet 10 may be a movable cabinet. Because the concrete main body 110 has the small wall thickness, an overall weight of the cabinet 10 may be reduced, thereby facilitating the transportation and movement of the cabinet 10. In some embodiments, the cabinet 10 may be a fixed cabinet, and the cabinet 10 may be fixed on a floor in a building or on a ground in an outdoor environment through a fixing component (for example, a locking mechanism).

In some embodiments, the concrete main body 110 may further include one or more than one cements of different compositions, various different particle materials, oxides, and various different additives. In some embodiments, the concrete main body 110 may include Portland cement, silica fume (in a powdery state), silica sand (with particle size of less than about 2cm), quartz powder (with particle size from about 20mm to about 30mm), a water reducing agent, a defoaming agent, a swelling agent, or a combination thereof.

In some embodiments, the concrete main body 110 may include from about 800 kg/m³ to about 900 kg/m³ of one or more of a Type I Portland cement, a Type II Portland cement, a Type III Portland cement, a Type IV Portland cement, and a Type V Portland cement. In some embodiments, the concrete main body 110 may include from about 400 kg/m³ to about 500 kg/m³ of one type of Type I, II, III, IV, or V Portland cement and from about 400 kg/m³ to about 500 kg/m³ of another type of Type I, II, III, IV, or V Portland cement. In some embodiments, the concrete main body 110 may include from 120 kg/m³ to about 180 kg/m³ of a silica fume. In some embodiments, the concrete main body 110 may include from about 900 kg/m³ to about 1000 kg/m³ of silica sand. In some embodiments, the concrete main body 110 may include from 30 kg/m³ to about 150 kg/m³ of quartz powder. In some embodiments, with the mentioned combination of silica fume and quartz powder, the concrete main body 110 can have a compressive strength exceeding that of a general concrete. In some embodiments, the addition of oxides can be used to adjust the appearance color of the concrete main body 110.

In some embodiments, the concrete main body 110 may include from about 10 kg/m³ to about 20 kg/m³ of a water reducing agent. In some embodiments, the concrete main body 110 may include equal to or less than about 10 kg/m³ of a defoaming agent and equal to or less than about 25 kg/m³ of a swelling agent.

In some embodiments, the concrete main body 110 has an unit structural weight equalling or exceeding 2300 kg/m³. In some embodiments, the concrete main body 110 has an unit structural weight from about 2300 kg/m³ to about 2700 kg/m³. In some embodiments, the concrete main body 110 has a compressive strength equalling or exceeding 120 MPa. In some embodiments, the concrete main body 110 has a compressive strength from about 120 MPa to about 180 MPa. In some embodiments, the concrete main body 110 has a maximum bending strength exceeding 15 MPa. Accordingly, the concrete main body 110 requires no reinforced cage and/or reinforcement assembly formed from a plurality of stirrups to increase the bending resistance, such that the concrete main body 110 can have reduced wall thickness, and the overall weight of the cabinet 10 can be reduced. In addition, the concrete main body 110 may provide high compressive strength and a high bending strength for to the cabinet 10, which can thus be used in a relatively extreme environment (e.g., an environment subjected to a high-temperature flame) while still can maintaining integrity of the entire structure.

In some embodiments, the concrete main body 110 has a thermal conductivity equal to or less than about 1.8 W/m·K. In some embodiments, the concrete main body 110 has a thermal conductivity from about 1.6 W/m·K to about 1.8 W/m·K. Compared with metal materials or a general concrete (having thermal conductivity from about 1.9 W/m·K to about 2.1 W/m·K), the concrete main body 110 of the present disclosure has a better thermal insulation effect, which is beneficial in reducing heat conduction between accommodating space S1 and the exterior of concrete main body 110. When the devices or elements in the accommodating space S1 need to be maintained at a specific high temperature or a specific low temperature, the excellent thermal insulation effect of the concrete main body 110 helps to reduce the energy required by the air-conditioning equipment, which can reduce cost and has additional effects of environmental protection, energy saving, and carbon reduction.

In some embodiments, the concrete main body 110 is integrally formed. In some embodiments, a mixed concrete slurry may be poured into a mold with a predetermined shape, followed by curing and demoulding to form the integrally-formed concrete main body 110 (e.g., the walls 111, 112, 113, 114, and 115 can be integrally formed).

In some embodiments, the concrete main body 110 may include multiple partial structural components or walls (e.g., the walls 111, 112, 113, 114, and 115) assembled together. In some embodiments, a mixed concrete slurry may be poured into a mold with a predetermined shape, followed by curing and demoulding to form multiple partial structural components or walls, and then these partial structural components or walls may be connected by connectors (e.g., screws) or by grouting to fill joint regions between the partial structural components or walls, so as to form the concrete main body 110 assembled by multiple partial structural components or walls.

The heat resistant layer 170 may be disposed on one or more inner surfaces of the walls in the accommodating space S1. For example, the heat resistant layer 170 may be disposed on an inner surface 111a of the wall 111, an inner surface (not shown in the drawing) of the wall 112, an inner surface 113a of the wall 113, an inner surface 114a of the wall 114, and an inner surface 115a of the wall 115. In some embodiments, the heat resistant layer 170 directly contacts the plurality of walls (for example, the wall 111, the wall 112, the wall 113, the wall 114, and the wall 115) of the concrete main body 110. In some embodiments, the heat resistant layer 170 directly contacts one or more inner surfaces of the plurality of walls (for example, the wall 111, the wall 112, the wall 113, the wall 114, and the wall 115) of the concrete main body 110. The heat resistant layer 170 may also be referred to as a "heat insulation layer". In some embodiments, the heat resistant layer 170 is configured to reduce, insulate, or block heat conduction between the accommodating space S1 of the cabinet 10 and an external environment.

In some embodiments, the heat resistant layer 170 includes or is made of a material with a heat-withstanding temperature of about 1200°C to about 1400°C (for example, a material with a heat-withstanding temperature of about 1300°C). In some embodiments, the heat resistant layer 170 includes or is made of a material with a heat-withstanding temperature of about 600°C, 700°C, or 800°C or more. In some embodiments, a volumetric density of the heat resistant layer 170 is equal to or less than about 200 kg/m³. In some embodiments, the volumetric density of the heat resistant layer 170 is equal to or less than about 160 kg/m³, 140 kg/m³, or 130 kg/m³. In some embodiments, the volumetric density of the heat resistant layer 170 is about 120 kg/m³ to about 160 kg/m³. In some embodiments, a thermal conductivity of the heat resistant layer 170 is equal to or less than about 0.28 W/m·K. In some embodiments, the thermal conductivity of the heat resistant layer 170 is equal to or less than about 0.24 W/m·K, 0.14 W/m·K, or 0.06 W/m·K. In some embodiments, a heating linear shrinkage rate of the heat resistant layer 170 is about 2.4% to about 3.0%, about 2.6% to about 2.8%, or about 2.7%. In some embodiments, the heating linear shrinkage rate is measured after a sample is heated at 1200°C for 24 hours.

In some embodiments, the heat resistant layer 170 includes a mineral wool, an EPE foam, a ceramic fiber blanket, a soluble fiber blanket, or any combination of the above. In some embodiments, the heat resistant layer 170 has a thickness T2 less than or equal to about 3 centimeters. In some embodiments, the heat resistant layer 170 has a thickness T2 less than or equal to about 2.5 centimeters, 2 centimeters, 1.5 centimeters, 1 centimeter, 0.5 centimeters, or 0.2 centimeters.

The flame retardant layer 120 may be disposed on the heat resistant layer 170 and exposed to the accommodating space S1. In some embodiments, the flame retardant layer 120 directly contacts the heat resistant layer 170. In some embodiments, the flame retardant layer 120 is configured to withstand a flame having a temperature equal to or greater than about 600°C, 700°C, 800°C, or about 900°C to about 1300°C.

In some embodiments, the flame retardant layer 120 includes or is made of a material with a heat-withstanding temperature of about 1200°C to about 1400°C (for example, a material with a heat-withstanding temperature of about 1300°C). In some embodiments, a volumetric density of the flame retardant layer 120 is equal to or greater than about 200 kg/m³. In some embodiments, the volumetric density of the flame retardant layer 120 is equal to or greater than about 250 kg/m³, 260 kg/m³, or 280 kg/m³. In some embodiments, the volumetric density of the flame retardant layer 120 is about 250 kg/m³ to about 300 kg/m³. In some embodiments, the volumetric density of the heat resistant layer 170 is lower than the volumetric density of the flame retardant layer 120. In some embodiments, a thermal conductivity of the flame retardant layer 120 is equal to or less than about 0.20 W/m·K. In some embodiments, the thermal conductivity of the flame retardant layer 120 is equal to or less than about 0.17 W/m·K, 0.12 W/m·K, or 0.07 W/m·K. In some embodiments, a heating linear shrinkage rate (1200°C/24 hours) of the flame retardant layer 120 is about 3.2% to about 4.0%, about 3.4% to about 3.8%, or about 3.6%. In some embodiments, the heating linear shrinkage rate of the heat resistant layer 170 is lower than the heating linear shrinkage rate of the flame retardant layer 120.

In some embodiments, the flame retardant layer 120 includes a ceramic fiber plate, a soluble fiber blanket, or a combination of the above. In some embodiments, the flame retardant layer 120 and the heat resistant layer 170 may include a same or similar chemical composition. In some embodiments, both the flame retardant layer 120 and the heat resistant layer 170 include silicon oxide, calcium oxide, and magnesium oxide. In some embodiments, the flame retardant layer 120 has a thickness T3 less than or equal to about 5 centimeters. In some embodiments, the flame retardant layer 120 has a thickness T3 less than or equal to about 4.5 centimeters, 4 centimeters, 3 centimeters, 2.5 centimeters, or 2 centimeters.

In some embodiments, the cabinet 10 is configured to withstand a flame at a temperature equal to or greater than about 600°C for 2 hours or more. In some embodiments, the cabinet 10 is configured to withstand a flame at a temperature equal to or greater than about 900°C for 2 hours or more. In some embodiments, the cabinet 10 is configured to withstand a flame at a temperature equal to or greater than about 900°C to about 1300°C for 2 hours or more. In some embodiments, the cabinet 10 satisfies the requirement of withstanding a flame for 2 hours or more of CNS 12514-1 (or ISO 834-1). In some embodiments, an entirety of the concrete main body 110, the flame retardant layer 120, and the heat resistant layer 170 is configured to withstand a flame having a temperature equal to or greater than about 600°C for 2 hours or more. In some embodiments, the entirety of the concrete main body 110, the flame retardant layer 120, and the heat resistant layer 170 is configured to withstand a flame at a temperature equal to or greater than about 900°C for 2 hours or more. In some embodiments, the entirety of the concrete main body 110, the flame retardant layer 120, and the heat resistant layer 170 is configured to withstand a flame at a temperature equal to or greater than about 900°C to about 1300°C for 2 hours or more. In some embodiments, the entirety of the concrete main body 110, the flame retardant layer 120, and the heat resistant layer 170 satisfies the requirement of withstanding a flame for 2 hours or more of the CNS 12514-1 (or the ISO 834-1).

The door 130 may be pivotally connected to a lateral edge (e.g., at least one of a lateral edge 1171 and a lateral edge 1172) of an opening 117 of the concrete main body 110. In some embodiments, a door frame 130A is disposed on the lateral edge of the opening 117. In some embodiments, the door 130 may be pivotally connected to the opening 117 of the concrete main body 110 through the door frame 130A. In some embodiments, the door 130 may be pivotally connected to at least one of the lateral edge 1171 and the lateral edge 1172 of the opening 117 of the concrete main body 110 through the door frame 130A. In some embodiments, the door 130 may include two door plates that open in opposite directions and pivotally connect to the lateral edges 1171 and 1172, respectively. In some embodiments, the door 130 is pivotally connected to the door frame 130A on the lateral edges 1171 and 1172 of the opening 117 of the concrete main body 110. In some embodiments, the door 130 may include a single door plate with a side pivotally connected to the lateral edge 1171 or the lateral edge 1172 of the opening 117 of the concrete main body 110. In some embodiments, the door 130 may be pivotally connected to the the lateral edge 1171 or the lateral edge 1172 of the opening 117 of the concrete main body 110 through the door frame 130A. In some embodimeents, the door 130 may be a refractory door. In some embodiments, the door frame 130A may include a refractory material.

In some embodiments, as shown in FIG. 1A, the cabinet 10 includes the door 130 covering the entire area of a lateral surface (i.e., the lateral surface opposite to the wall 112, that is, the lateral surface where the opening 117 is located) of the cabinet 10. In some embodiments, in addition to the walls 111-115, the cabinet 10 may further include another wall at a lateral surface opposite to the wall 112, the opening 117 only exposing a partial area of the wall, and the door 130 may be pivotally connected to the lateral edge of the opening 117 of the wall. In some other embodiments, the cabinet 10 may include two or more doors. In some embodiments, these doors may be disposed on the same wall or different walls (the same lateral surface or different lateral surfaces), and these doors may have different designs (e.g., may be a design of two door plates open toward opposite directions or a design of a single door plate).

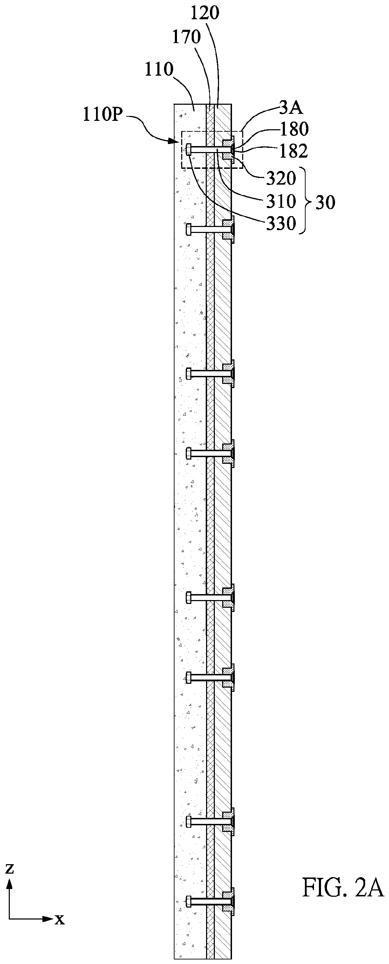

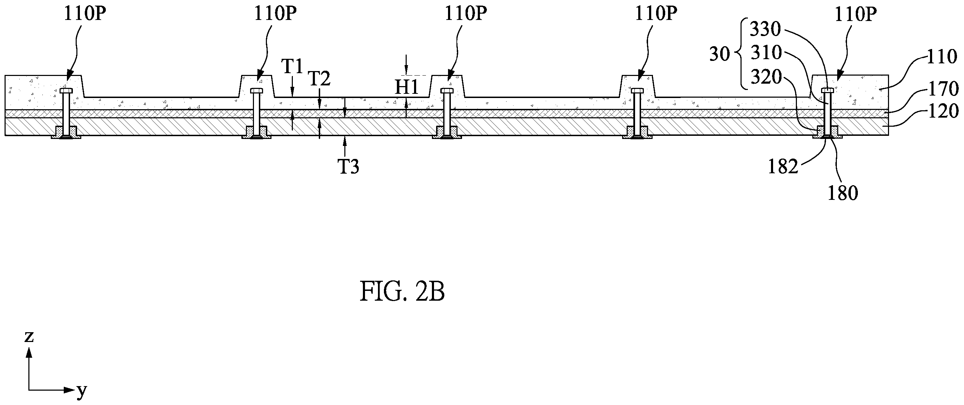

FIG. 2A is a partial cross-sectional view of a cabinet 10 according to some embodiments of the present disclosure, and FIG. 2B is a partial cross-sectional view of a cabinet 10 according to some embodiments of the present disclosure. In some embodiments, FIG. 2A is a partial cross-sectional view of a cabinet 10 along a section line 2A-2A' in FIG. 1A, and FIG. 2B is a partial cross-sectional view of a cabinet 10 along a section line 2B-2B' in FIG. 1A.

In some embodiments, the cabinet 10 may include a locking mechanism 30. The flame retardant layer 120 and the heat resistant layer 170 are locked to the concrete main body 110 through the locking mechanism 30. In some embodiments, the locking mechanism 30 includes a plurality of locking members. For example, the locking mechanism 30 may include nuts and studs (or screws). In some embodiments, the locking mechanism 30 includes a stud 310 and a nut 320. The stud 310 (also referred to as the locking member) screws and locks the flame retardant layer 120, the heat resistant layer 170, and the concrete main body 110. In some embodiments, the nut 320 is screwed to the stud 310 and abuts against the flame retardant layer 120. In some embodiments, the locking mechanism 30 may include a nut 330 (also referred to as the locking member). The stud 310 is locked in the concrete main body 110 through the nut 330.

In some embodiments, the locking mechanism 30 includes at least one heat resistant material. In some embodiments, the stud 310 and the nut 330 may include a material suitable for manufacturing the locking member, for example, a metal material or a ceramic material. In some embodiments, the stud 310 and the nut 330 may include or be made of stainless steel (for example, 304 stainless steel). In some embodiments, the nut 320 includes the aforesaid at least one heat resistant material. The nut 320 may also be referred to as a heat resistant locking member. In some embodiments, the nut 320 includes or is made of a material with a heat-withstanding temperature of about 1200°C to about 1400°C (for example, a material with a heat-withstanding temperature of about 1300°C). In some embodiments, the nut 320 includes or is made of a material with a heat-withstanding temperature of about 600°C, 700°C, or 800°C or more. In some embodiments, the nut 320 may include or is made of the ceramic material.

In some embodiments, the cabinet 10 may further include a heat resistant sealing structure. The heat resistant sealing structure covers the stud 310 and is filled in a space between the flame retardant layer 120 and the locking mechanism 30. In some embodiments, the heat resistant sealing structure may include a heat resistant filler 180 and a heat resistant protection layer 182.

In some embodiments, also referring to FIG. 1A, the concrete main body 110 includes a plurality of protruding structures 110P (or protruding rib structures) protruding outward from the outer surfaces of the walls of the concrete main body 110, and the locking member (or the stud 310) of the locking mechanism 30 extends into the protruding structure 1 10P. In some embodiments, as shown in FIG. 2A, in an extending direction (namely, a z-axis direction) of the protruding structure 110P, a plurality of studs 310 extend into a single protruding structure 110P. In some embodiments, as shown in FIG. 2B, in a direction (namely, a y-axis direction) perpendicular to the extending direction of the protruding structure 110P, each of the studs 310 extends into each of the corresponding protruding structures 110P. In some embodiments, a height H1 of the protruding structure 110P is greater than the thickness T1 of the wall of the concrete main body 110. In some embodiments, the height H1 of the protruding structure 110P is greater than the thickness T2 of the heat resistant layer 170. In some embodiments, the height H1 of the protruding structure 110P is greater than the thickness T3 of the flame retardant layer 120.

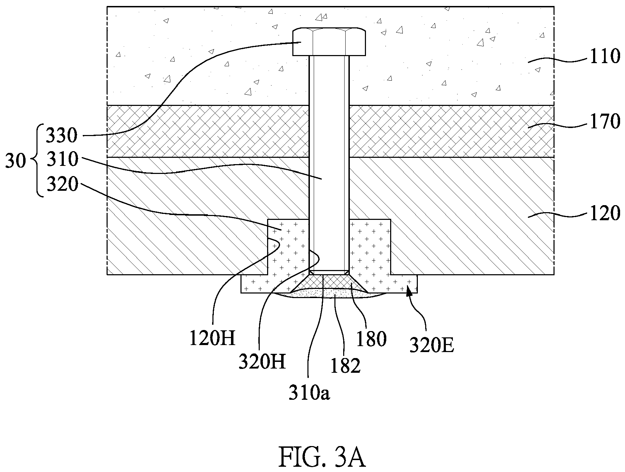

FIG. 3A is a partial cross-sectional view of a cabinet 10 according to some embodiments of the present disclosure. In some embodiments, FIG. 3A is a partial cross-sectional view of a region 3A in FIG. 2A.

In some embodiments, the stud 310 may be an example of the locking member, and the nut 320 may be an example of the heat resistant locking member. In some embodiments, the stud 310 (or the locking member) penetrates the heat resistant layer 170 and an opening 120H of the flame retardant layer 120 and is locked to the concrete main body 110. In some embodiments, the nut 320 (or the heat resistant locking member) is locked to the stud 310. In some embodiments, the heat resistant sealing structure covers the stud 310 and is filled in at least one space between the opening 120H and the stud 310. In some embodiments, the nut 320 (or the heat resistant locking member) includes an extending portion 320E, and the extending portion 320E covers a portion of a surface of the flame retardant layer 120. In some embodiments, the extending portion 320E covers the space between the opening 120H and the stud 310.

In some embodiments, an end portion 310a of the stud 310 (or the locking member) passes through a screw hole 320H of the nut 320 (or the heat resistant locking member), and the heat resistant filler 180 covers the end portion 310a. In some embodiments, the heat resistant protection layer 182 covers and contacts the heat resistant filler 180. In some embodiments, the heat resistant protection layer 182 covers a portion of a surface of the extending portion 320E. In some embodiments, the heat resistant protection layer 182 covers and is filled in a space between the heat resistant filler 180 and the nut 320 (or the heat resistant locking member). In some embodiments, the heat resistant sealing structure including the heat resistant filler 180 and the heat resistant protection layer 182 covers and contacts the stud 310. In some embodiments, the heat resistant filler 180 and the heat resistant protection layer 182 cover the stud 310 entirely and isolate the stud 310 from the outside. In some embodiments, the nut 320, the heat resistant filler 180, and the heat resistant protection layer 182 form a heat resistant structure, and the heat resistant structure covers the opening 120H of the flame retardant layer 120 and is exposed to the accommodating space S1. In some embodiments, the heat resistant protection layer 182 covers the heat resistant filler 180 and is exposed to the accommodating space S1.

In some embodiments, the nut 320 (or the heat resistant locking member) includes or is made of a material with a heat-withstanding temperature of about 1300°C to about 1400°C. In some embodiments, the nut 320 (or the heat resistant locking member) includes or is made of a material with a heat-withstanding temperature of about 600°C, 700°C, or 800°C or more. In some embodiments, the nut 320 (or the heat resistant locking member) may include or be made of a ceramic material. In some embodiments, the heat resistant filler 180 includes a ceramic wool. In some embodiments, the heat resistant filler 180 includes ceramic fibers, soluble fibers, or a combination of the above. In some embodiments, the heat resistant protection layer 182 includes a heat resistant paste (for example, a ceramic paste). In some embodiments, the heat resistant protection layer 182 includes ceramic fibers and an inorganic adhesive.

According to some embodiments of the present disclosure, the stud 310 made of a metal material is protected by the nut 320, the heat resistant filler 180 (for example, a ceramic wool), and the heat resistant protection layer 182 (for example, a ceramic paste) that are made of one or more ceramic materials. Because a thermal conductivity of the ceramic material is much lower than a thermal conductivity of metal, thermal energy is not easily transferred to the stud 310. Therefore, the thermal energy is not easily transferred to the concrete main body 110 through the stud 310, so that a structure of the concrete main body 110 is not damaged. Therefore, the aforesaid design has an effect of improving fire resistance and protection of the cabinet 10.

In addition, according to some embodiments of the present disclosure, the nut 320 (or the heat resistant locking member) includes or is made of the material with the heat-withstanding temperature of about 1200°C to about 1400°C (for example, the material with the heat-withstanding temperature of about 1300°C), such as ceramic material. In this way, softening of a metal nut due to high heat can be effectively avoided. For example, the maximum heat-withstanding temperature of a nut made of 304 stainless steel is about 800°C, and the nut softens due to a high temperature, resulting in desorption and damage of the flame retardant layer 120 and the heat resistant layer 170.

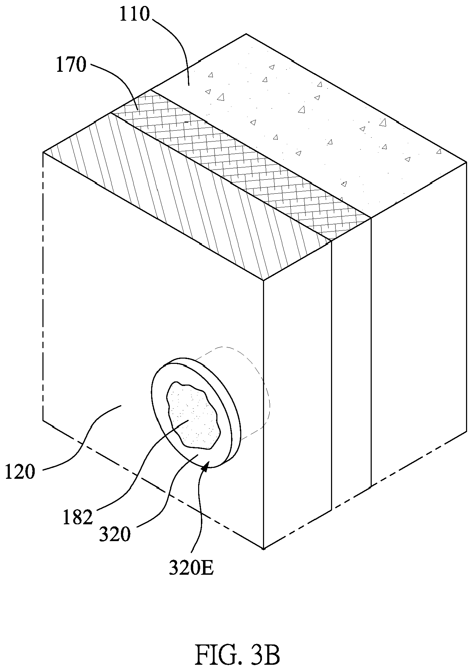

FIG. 3B is a partial schematic diagram of a cabinet 10 according to some embodiments of the present disclosure. In some embodiments, FIG. 3B is a partial schematic diagram of the flame retardant layer 120, the heat resistant protection layer 182, and the nut 320 (or the heat resistant locking member) in FIG. 3A.

In some embodiments, a surface roughness of the heat resistant protection layer 182 is greater than a surface roughness of the flame retardant layer 120. In some embodiments, the surface roughness of the heat resistant protection layer 182 is greater than the surface roughness of the nut 320 (or the heat resistant locking member). In some embodiments, the surface roughness of the heat resistant protection layer 182 is greater than the surface roughness of the extending portion 320E. In some embodiments, a surface of the heat resistant protection layer 182 has a microstructure. In some embodiments, the surface of the heat resistant protection layer 182 has an irregular profile. In some embodiments, the heat resistant protection layer 182 has an uneven height or thickness. In some embodiments, the heat resistant protection layer 182 has an asymmetric shape or pattern. In some embodiments, the heat resistant protection layer 182 has an irregular peripheral profile.

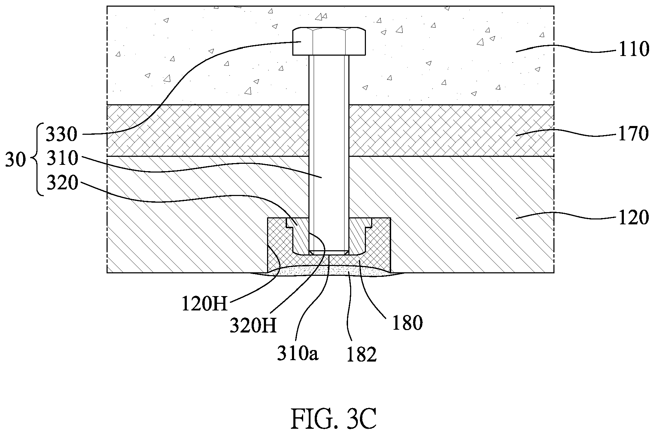

FIG. 3C is a partial cross-sectional view of a cabinet 10 according to some embodiments of the present disclosure. In some embodiments, FIG. 3C is a partial cross-sectional view of the region 3A in FIG. 2A.

In some embodiments, the nut 320 is disposed in the opening 120H of the flame retardant layer 120. In some embodiments, the heat resistant filler 180 covers the end portion 310a of the stud 310 and the nut 320. In some embodiments, the heat resistant filler 180 is filled in the opening 120H of the flame retardant layer 120. In some embodiments, the heat resistant protection layer 182 covers the heat resistant filler 180 and a portion of a surface of the flame retardant layer 120. In some embodiments, the heat resistant protection layer 182 covers and is filled in a space between the heat resistant filler 180 and the opening 120H.

In some embodiments, the heat resistant filler 180 and the heat resistant protection layer 182 cover the stud 310 entirely and isolate the stud 310 from the outside. In some embodiments, the heat resistant filler 180 and the heat resistant protection layer 182 cover the nut 320 entirely and isolate the nut 320 from the outside. In some embodiments, the nut 320 shown in FIG. 3C may include a material suitable for manufacturing a locking member, for example, a metal material or a ceramic material.

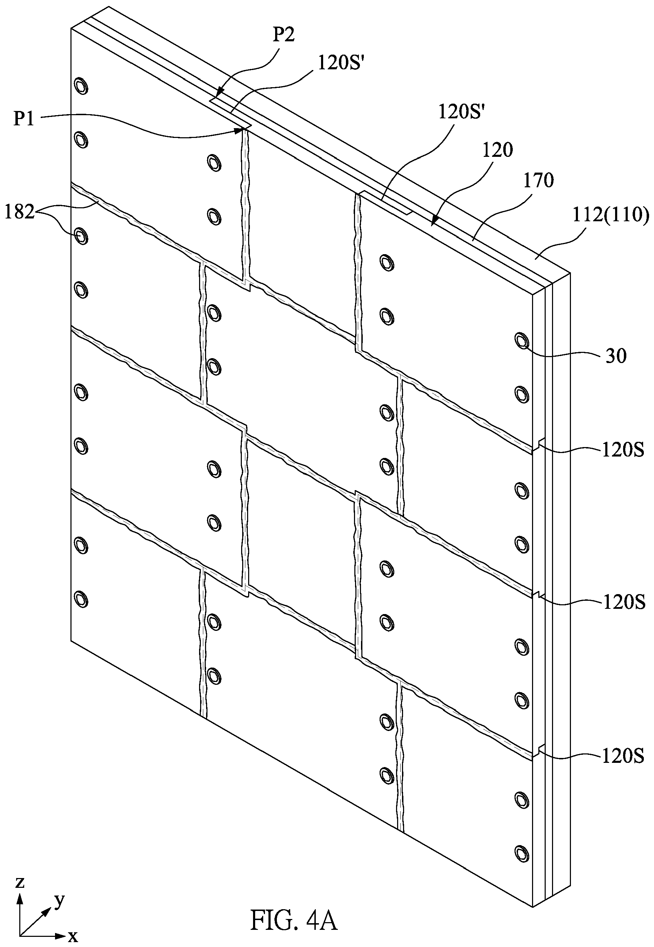

FIG. 4A is a partial schematic diagram of a cabinet 10 according to some embodiments of the present disclosure. In some embodiments, FIG. 4A is a partial schematic diagram of a concrete main body 110, a heat resistant layer 170, and a flame retardant layer 120.

In some embodiments, the flame retardant layer 120 includes a plurality of flame retardant plates continuously connected to each other, and at least one connection interface (for example, a connection interface 120S and a connection interface 120S') between the flame retardant plates is a non-planar surface. In some embodiments, the at least one connection interface (for example, the connection interface 120S and the connection interface 120S') between the plurality of flame retardant plates has a stepped cross-sectional profile. In some embodiments, one or more locking mechanisms 30 penetrate two flame retardant plates that are connected to each other, and lock the flame retardant plates and the heat resistant layer 170 to the concrete main body 110 (for example, the wall 112). In some embodiments, the connection interface (for example, the connection interface 120S and the connection interface 120S') between the flame retardant plates is a contact surface between the flame retardant plates. In some embodiments, the heat resistant protection layer 182 may further cover and be filled in a space between the flame retardant plates that are connected to each other. In some embodiments, the heat resistant protection layer 182 may cover a portion of a surface of the flame retardant plate.

In some embodiments, the connection interface 120S and the connection interface 120S' have different stepped cross-sectional profiles. In some embodiments, a length of the connection interface 120S' is greater than a length of the connection interface 120S. In some embodiments, an extending length of the connection interface 120S' along an x-axis direction is greater than an extending length of the connection interface 120S along a z-axis direction. In some embodiments, an area of the connection interface 120S' is greater than an area of the connection interface 120S. In some embodiments, a contact area of the connection interface 120S' is greater than a contact area of the connection interface 120S. In some embodiments, a stepped surface of the connection interface 120S' is greater than a stepped surface of the connection interface 120S.

When the flame retardant plates are attached to the cabinet side by side, the flame retardant plates may shrink when heated, causing the gaps between the flame retardant plates to become larger. Thus, a flame may easily penetrate through the gaps, causing a back temperature (namely, a temperature of an outer wall surface of a wall of the cabinet) of the cabinet to rise. In contrast, according to some embodiments of the present disclosure, non-planar surface connection interfaces are formed between connected flame retardant plates in a manner that the flame retardant plates are staggered attached or arranged. Even if the flame retardant plates may shrink when heated, causing the gaps between the flame retardant plates to become larger, the gaps formed by the non-planar surface connection interfaces are not a direct channel, but a tortuous channel, which can effectively prevent the flame from easily penetrating. For example, the connection interface 120S' shown in FIG. 4A has a stepped cross-sectional profile. When the flame retardant plates shrink due to heat and a gap is formed along the connection interface 120S', the gap does not directly penetrate the flame retardant plates to reach the heat resistant layer 170. The flame first enters the gap from a location P1, is blocked by a step surface of the connection interface 120S' and must be turned, and then attempts to penetrate the flame retardant plates toward a location P2. In this way, the flame can be effectively prevented from penetrating the flame retardant layer 120, thereby effectively reducing the range of the rising of the back temperature (namely, the temperature of the outer wall surface of the wall of the cabinet) of the cabinet.

In addition, according to some embodiments of the present disclosure, the heat resistant protection layer 182 further covers and is filled in the space (or the gap) between the connected flame retardant plates. Thus, it can more effectively prevent the flame from penetrating the flame retardant layer 120, thereby more effectively reducing the range of the rising of the back temperature (namely, the temperature of the outer wall surface of the wall of the cabinet) of the cabinet.

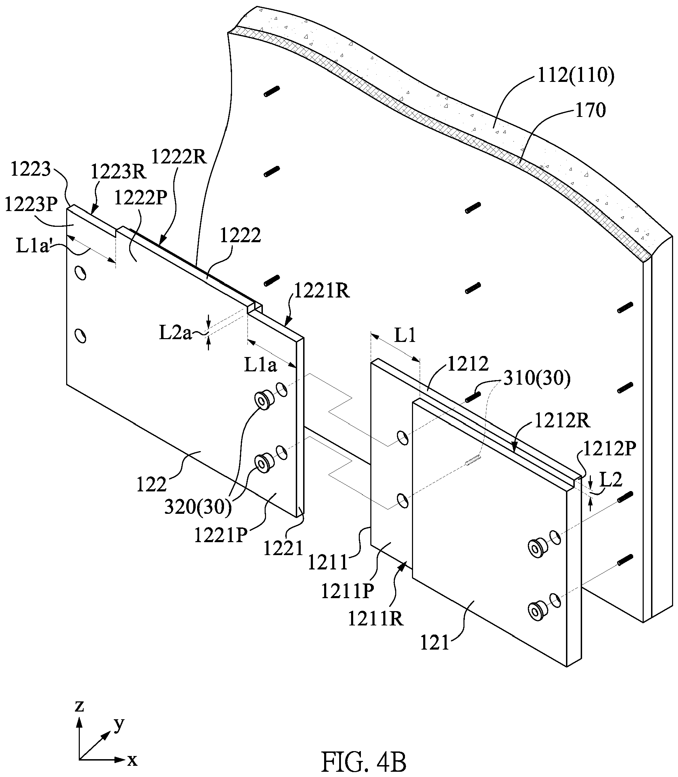

FIG. 4B is a partial exploded view of a cabinet 10 according to some embodiments of the present disclosure. In some embodiments, FIG. 4B is a partial schematic diagram of a concrete main body 110, a heat resistant layer 170, and a flame retardant layer 120. To clearly present and describe a partial structure of the cabinet 10, some components are omitted in FIG. 4B and are not shown. For example, only a part of flame retardant plates (for example, a flame retardant plate 121 and a flame retardant plate 122) of the flame retardant layer 120 are shown.

In some embodiments, a side surface 1211 of the flame retardant plate 121 has a stepped structure (or referred to as a first stepped structure), a side surface 1221 of the flame retardant plate 122 has a stepped structure (or referred to as a second stepped structure), and the two stepped structures are engaged with each other to connect the flame retardant plate 121 and the flame retardant plate 122. In some embodiments, the locking mechanism 30 penetrates the stepped structure of the flame retardant plate 121, the stepped structure of the flame retardant plate 122, and the heat resistant layer 170, to lock the heat resistant layer 170 and the flame retardant layer 120 to the concrete main body 110.

In some embodiments, the side surface 1211 of the flame retardant plate 121 has a flange 1211P, the side surface 1221 of the flame retardant plate 122 has a groove 1221R, and the flange 1211P is disposed in the groove 1221R to connect the flame retardant plate 121 and the flame retardant plate 122. In some embodiments, the side surface 1211 of the flame retardant plate 121 has a groove 1211R, the side surface 1221 of the flame retardant plate 122 has a flange 1221P, and the flange 1221P is disposed in the groove 1211R to connect the flame retardant plate 121 and the flame retardant plate 122. In some embodiments, the flange 1211P and the groove 1211R define the stepped structure of the flame retardant plate 121, and the flange 1221P and the groove 1221R define the stepped structure of the flame retardant plate 122.

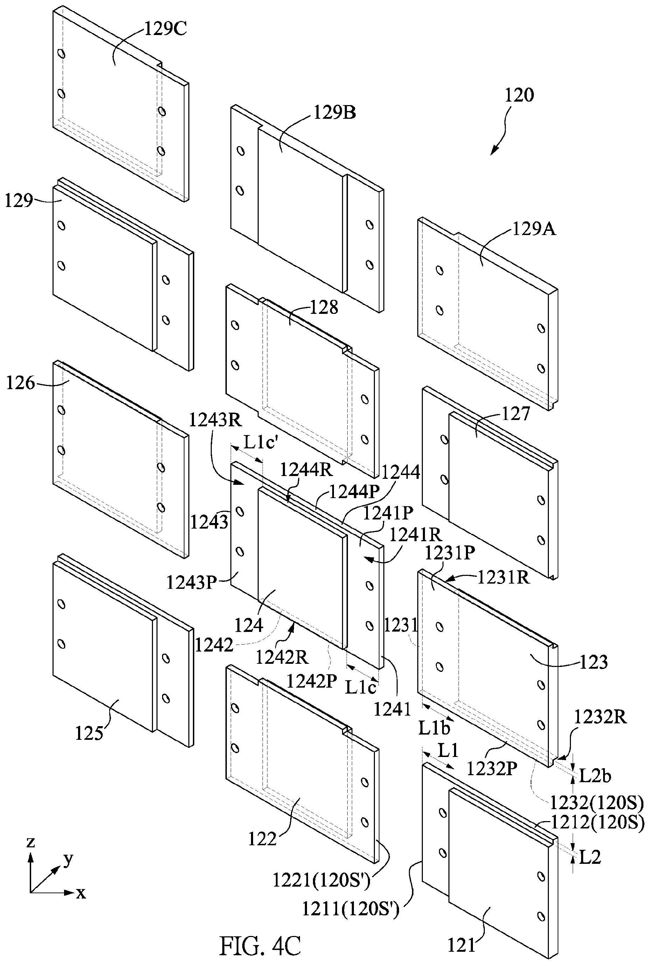

In some embodiments, a side surface 1212 of the flame retardant plate 121 has a flange 1212P and a groove 1212R. In some embodiments, the groove 1211R and the groove 1212R are in communication with each other. In some embodiments, the flange 1211P and the flange 1212P have a substantially same thickness. In some embodiments, the thickness of the flange 1211P and the flange 1212P is about a half of a maximum thickness of the flame retardant plate 121. In some embodiments, the flange 1211P of the flame retardant plate 121 defines a stepped cross-sectional profile (or referred to as a first stepped cross-sectional profile) of the side surface 1211 (or referred to as a connection interface), and the flange 1212P of the flame retardant plate 121 defines a stepped cross-sectional profile (or referred to as a second stepped cross-sectional profile) of the side surface 1212 (or referred to as a connection interface). In some embodiments, an extending length L1 of the flange 1211P is greater than an extending length L2 of the flange 1212P. In some embodiments, the flange 1212P and the groove 1212R of the side surface 1212 of the flame retardant plate 121 may define the stepped structure and be configured to be engaged with a stepped structure of another flame retardant plate (for example, a flame retardant plate 123 in FIG. 4C) to connect the flame retardant plate 121 and the another flame retardant plate.

In some embodiments, a side surface 1222 of the flame retardant plate 122 has a flange 1222P and a groove 1222R. In some embodiments, the flange 1221P and the flange 1222P have a substantially same thickness. In some embodiments, the thickness of the flange 1221P and the flange 1222P is about a half of a maximum thickness of the flame retardant plate 122. In some embodiments, the flange 1221P of the flame retardant plate 122 defines a stepped cross-sectional profile (or referred to as a third stepped cross-sectional profile) of the side surface 1221 (or referred to as a connection interface), and the flange 1222P of the flame retardant plate 122 defines a stepped cross-sectional profile (or referred to as a fourth stepped cross-sectional profile) of the side surface 1222 (or referred to as a connection interface). In some embodiments, an extending length L1a of the flange 1221P is greater than an extending length L2a of the flange 1222P. In some embodiments, the flange 1222P and the groove 1222R of the side surface 1222 of the flame retardant plate 122 may define the stepped structure and be configured to be engaged with a stepped structure of another flame retardant plate (for example, a flame retardant plate 124 in FIG. 4C) to connect the flame retardant plate 122 and the another flame retardant plate.

In some embodiments, a side surface 1223 of the flame retardant plate 122 has a flange 1223P and a groove 1223R. In some embodiments, the flange 1223P and the flange 1222P have a substantially same thickness. In some embodiments, the thickness of the flange 1223P and the flange 1222P is about a half of the maximum thickness of the flame retardant plate 122. In some embodiments, the flange 1223P of the flame retardant plate 122 defines a stepped cross-sectional profile (or referred to as a fifth stepped cross-sectional profile) of the side surface 1223 (or referred to as a connection interface). In some embodiments, an extending length L1a' of the flange 1223P is greater than the extending length L2a of the flange 1222P. In some embodiments, the flange 1223P and the groove 1223R of the side surface 1223 of the flame retardant plate 122 may define the stepped structure and be configured to be engaged with a stepped structure of another flame retardant plate (for example, a flame retardant plate 125 in FIG. 4C) to connect the flame retardant plate 122 and the another flame retardant plate.

FIG. 4C is a partial exploded view of a cabinet 10 according to some embodiments of the present disclosure. In some embodiments, FIG. 4C is a partial schematic diagram of a plurality of flame retardant plates of a flame retardant layer 120. To clearly present and describe a partial structure of the cabinet 10, some components are omitted in FIG. 4C and are not shown.

In some embodiments, the flame retardant layer 120 may include a plurality of flame retardant plates (for example, flame retardant plates 121, 122, 123, 124, 125, 126, 127, 128, 129, 129A, 129B, and 129C) continuously connected to each other.

In some embodiments, a side surface 1231 of the flame retardant plate 123 has a flange 1231P and a groove 1231R, and a side surface 1232 of the flame retardant plate 123 has a flange 1232P and a groove 1232R. In some embodiments, the groove 1231R and the groove 1232R are in communication with each other. In some embodiments, the flange 1231P and the flange 1232P have a substantially same thickness. In some embodiments, the thickness of the flange 1231P and the flange 1232P is about a half of a maximum thickness of the flame retardant plate 123. In some embodiments, the flange 1231P of the flame retardant plate 123 defines a stepped cross-sectional profile of the side surface 1231 (or referred to as a connection interface), and the flange 1232P of the flame retardant plate 123 defines a stepped cross-sectional profile of the side surface 1232 (or referred to as a connection interface). In some embodiments, an extending length L1b of the flange 1231P is greater than an extending length L2b of the flange 1232P. In some embodiments, the flange 1232P and the groove 1232R of the side surface 1232 of the flame retardant plate 123 may define a stepped structure and be configured to be engaged with a stepped structure of the flame retardant plate 121 to connect the flame retardant plate 123 and the flame retardant plate 121.

In some embodiments, a side surface 1241 of the flame retardant plate 124 has a flange 1241P and a groove 1241R, a side surface 1242 of the flame retardant plate 124 has a flange 1242P and a groove 1242R, a side surface 1243 of the flame retardant plate 124 has a flange 1243P and a groove 1243R, and a side surface 1244 of the flame retardant plate 124 has a flange 1244P and a groove 1244R. In some embodiments, the flange 1241P, the flange 1242P, the flange 1243P, and the flange 1244P have a substantially same thickness. In some embodiments, the thickness of the flange 1241P, the flange 1242P, the flange 1243P, and the flange 1244P is about a half of a maximum thickness of the flame retardant plate 124. In some embodiments, the flange 1241P of the flame retardant plate 124 defines a stepped cross-sectional profile of the side surface 1241 (or referred to as a connection interface), the flange 1242P of the flame retardant plate 124 defines a stepped cross-sectional profile of the side surface 1242 (or referred to as a connection interface), and the flange 1243P of the flame retardant plate 124 defines a stepped cross-sectional profile of the side surface 1243 (or referred to as a connection interface). In some embodiments, an extending length L1c of the flange 1241P is greater than the extending length L1b of the flange 1231P. In some embodiments, the extending length L1c of the flange 1241P and an extending length L1c' of the flange 1243P may be the same or different. In some embodiments, the flange 1241P and the groove 1241R of the side surface 1241 of the flame retardant plate 124 may define a stepped structure and be configured to be engaged with the stepped structure of the flame retardant plate 123 to connect the flame retardant plate 123 and the flame retardant plate 124. In some embodiments, the flange 1242P and the groove 1242R of the side surface 1242 of the flame retardant plate 124 may define a stepped structure and be configured to be engaged with a stepped structure of the flame retardant plate 122 to connect the flame retardant plate 122 and the flame retardant plate 124. In some embodiments, the flange 1243P and the groove 1243R of the side surface 1243 of the flame retardant plate 124 may define a stepped structure and be configured to be engaged with a stepped structure of the flame retardant plate 126 to connect the flame retardant plate 124 and the flame retardant plate 126.

In some embodiments, each flame retardant plate of the flame retardant layer 120 has at least one stepped structure and is configured to be engaged with a stepped structure of another adjacent flame retardant plate to connect the two flame retardant plates. In some embodiments, at least two adjacent side surfaces of each flame retardant plate of the flame retardant layer 120 each have a stepped structure, configured to be engaged with stepped structures of two adjacent flame retardant plates respectively, to connect the three flame retardant plates. In some embodiments, at least two connection interfaces (or contact surfaces) of each flame retardant plate of the flame retardant layer 120 are both non-planar surfaces, and have, for example, stepped structures. For example, in some embodiments, the connection interface 120S' (namely, a contact surface between the side surface 1211 and the side surface 1221) between the flame retardant plate 121 and the flame retardant plate 122 and the connection interface 120S (namely, a contact surface between the side surface 1212 and the side surface 1232) between the flame retardant plate 121 and the flame retardant plate 123 are adjacent to each other and are both non-planar surfaces.

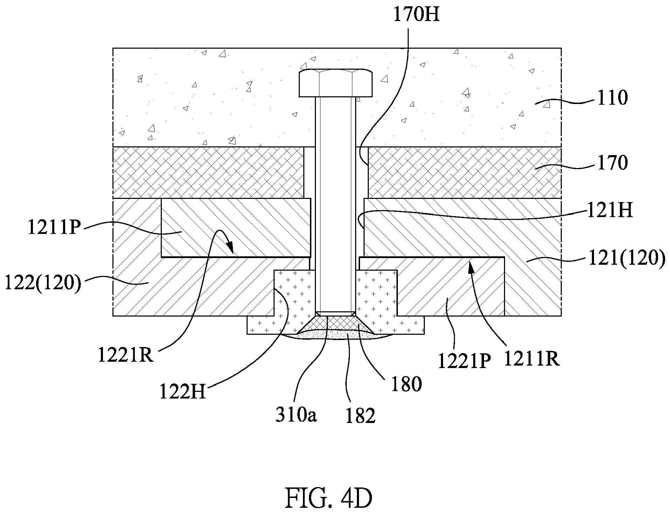

FIG. 4D is a partial cross-sectional view of a cabinet according to some embodiments of the present disclosure. In some embodiments, FIG. 4D is a partial cross-sectional view of a region in FIG. 4A to FIG. 4C.

In some embodiments, the stud 310 may be an example of the locking member, and the nut 320 may be an example of the heat resistant locking member. In some embodiments, the stud 310 (or the locking member) penetrates an opening 170H of the heat resistant layer 170, an opening 121H of the flame retardant plate 121, and an opening 122H of the flame retardant plate 122, and is locked to the concrete main body 110. In some embodiments, the nut 320 (or the heat resistant locking member) is locked to the stud 310. In some embodiments, a heat resistant sealing structure covers the stud 310 and is filled in at least one space between the opening 122H and the stud 310. In some embodiments, the nut 320 (or the heat resistant locking member) includes an extending portion 320E, and the extending portion 320E covers a portion of a surface of the flame retardant plate 122. In some embodiments, the extending portion 320E covers the space between the opening 122H and the stud 310.

In some embodiments, the opening 122H has a stepped width. In some embodiments, a part (or referred to as a first part) of the opening 122H close to an end portion 310a of the stud 310 has a relatively large width, and a part (or referred to as a second part) of the opening 122H close to the opening 121H has a relatively small width. In some embodiments, the width of the second part of the opening 122H and a width of the opening 121H are substantially the same or different. In some embodiments, the second part of the opening 122H and the opening 121H are staggered or misaligned. In some embodiments, a width of the opening 170H is equal to or greater than the width of the opening 121H. In some embodiments, the opening 170H and the opening 121H are staggered or misaligned.

In some embodiments, the end portion 310a of the stud 310 (or the locking member) passes through a screw hole 320H of the nut 320 (or the heat resistant locking member), and the heat resistant filler 180 covers the end portion 310a. In some embodiments, the heat resistant protection layer 182 covers and contacts the heat resistant filler 180. In some embodiments, the heat resistant protection layer 182 covers a portion of a surface of the extending portion 320E. In some embodiments, the heat resistant protection layer 182 covers and is filled in a space between the heat resistant filler 180 and the nut 320 (or the heat resistant locking member). In some embodiments, the heat resistant sealing structure including the heat resistant filler 180 and the heat resistant protection layer 182 covers and contacts the stud 310. In some embodiments, the heat resistant filler 180 and the heat resistant protection layer 182 cover the stud 310 entirely and isolate the stud 310 from the outside. In some embodiments, the nut 320, the heat resistant filler 180, and the heat resistant protection layer 182 form a heat resistant structure, and the heat resistant structure covers the opening 122H of the flame retardant plate 122 and is exposed to the accommodating space S1. In some embodiments, the heat resistant protection layer 182 covers the heat resistant filler 180 and is exposed to the accommodating space S1.

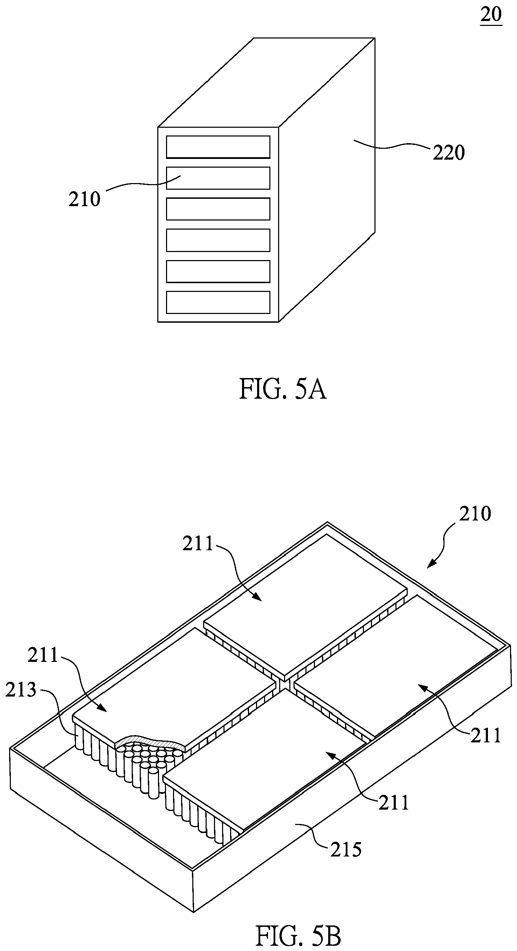

FIG. 5A is a schematic diagram of a battery system 20 according to some embodiments of the present disclosure, and FIG. 5B is a schematic diagram of a battery pack 210 according to some embodiments of the present disclosure. To clearly present and describe a main structure of the battery pack 210, some components are omitted in FIG. 5B and are not shown.

In some embodiments, the cabinet 10 is configured to accommodate at least one battery system 20. In some embodiments, the battery system 20 may include a plurality of battery packs 210, and each of the battery packs 210 may include a plurality of battery modules. In some embodiments, the battery system 20 may include an accommodating casing 220, and the battery packs 210 are disposed in the accommodating casing 220.

In some embodiments, the battery pack 210 may include a plurality of battery modules 211 and a housing 215, and the battery modules 211 are disposed in the housing 215. In some embodiments, each of the battery modules 211 may include a plurality of batteries 213. In some embodiments, the battery 213 may be a cylindrical lithium ion battery or other types of battery. For example, the cylindrical lithium ion battery may be an 18650 battery, a 21700 battery, or other types of lithium ion battery. In some embodiments, the battery modules 211 in the battery pack 210 are connected in series, and the batteries 213 in the battery module 211 are connected in parallel. In some embodiments, an extending direction between the positive and negative electrodes of the battery 213 is perpendicular to an extending direction of a bottom plate of the housing 215.

When the batteries 213 (e.g., lithium batteries) in the battery pack 210 are charged or discharged, various factors (e.g., overcharge, impact, electronic control system errors, and defects in the operating environment or the process) may cause lithium ions to puncture the separator in the battery, such that the electrodes contact and create a short circuit, resulting in a high-temperature chemical reaction that ignites the combustible organic components in the battery. The high temperature generated by the thermal runaway of the lithium battery may be as high as from 600°C to 1000°C or even higher. When the heat energy diffuses from the ignited battery 213 to the surroundings, the cells of other adjacent batteries 213 will also heat up. When the tolerance temperature of the cells is exceeded (e.g., the tolerance temperature of a lithium battery is about 150° C.), the adjacent heated cells will also self-dissipate and cause the battery packs 210 and even the entire battery system 20 to burn out. Moreover, the combustion of the positive electrode material inside the battery comes from the chemical reaction of the internal materials, so it will lead to continuous generation of flame, and the temperature of the flame may be as high as from 600°C to 1000°C.

According to some embodiments of the present disclosure, with the cabinet 10 including a composite structure including the concrete main body 110, the heat ressistent layer 170, and the flame retardant layer 120, the high temperature generated by the thermal runaway of the lithium battery can be effectively limited within the cabinet 10, thermal transmission can be blocked effectively, the high-temperature thermal conductione between the inside of the cabinet 10 and the outside of the cabinet 10 can be prevented, and thus the high-temperature flame and heat can be confined within the cabinet 10. In addition, since the high-temperature flame and heat can be confined within the cabinet 10, the occurrence of fire accidents caused by the spread of flames can be prevented by only pouring water into the cabinet 10 at the same time. Therefore, the disaster relief process can be more convenient and safer.

Furthermore, conventional metal energy storage cabinets are prone to deformation, twisting, bending, etc., when subjected to high temperatures, which leads to the collapse of the metal container and allows flames to escape outside of the metal container, which makes it difficult to control the fire spread. In contrast, according to some embodiments of the present disclosure, the concrete main body 110 of the cabinet 10 has a high compressive strength and a high bending resistance, such that the composite structure of the concrete main body 110, the heat resistant layer 170, and the flame retardant layer 120 does not soften and deform to collapse even in a high temperature environment, and thus the process of disaster relief can be more convenient and safer. Furthermore, the concrete main body 110 of the present disclosure can provide sufficient structural strength for the cabinet 10 with no need for embedded steel bars or only a few steel bars. Compared with conventional reinforced concrete, the cabinet 10 of the present disclosure has reduced weight, which is further beneficial to transportation.

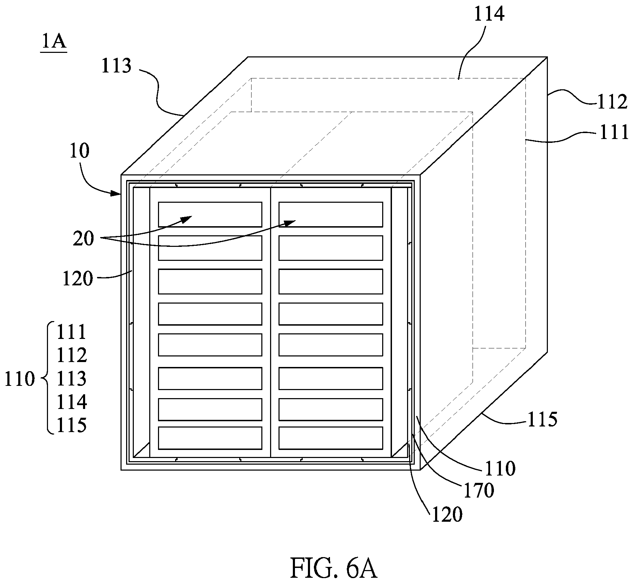

FIG. 6A is a perspective view of an energy storage apparatus 1A according to some embodiments of the present disclosure. The energy storage apparatus 1A includes a movable cabinet 10 and one or more battery systems 20.

In some embodiments, the battery system 20 is fixedly connected to the cabinet 10. In some embodiments, the battery system 20 may be locked to one or more walls of a concrete main body 110 of the cabinet 10 through a locking structure (not shown). For example, as shown in FIG. 6A, the battery system 20 may be locked to the wall 114 and the wall 115 of the concrete main body 110 of the cabinet 10.

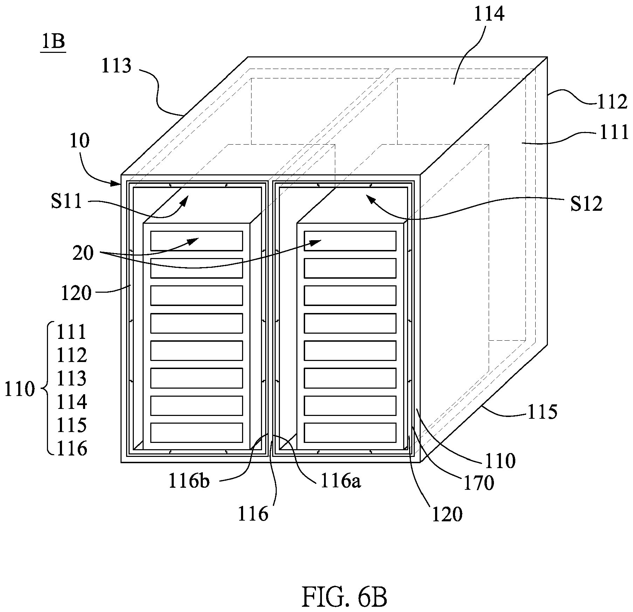

FIG. 6B is a perspective view of an energy storage apparatus 1B according to some embodiments of the present disclosure. The energy storage apparatus 1B includes a cabinet 10 and one or more battery systems 20.

In some embodiments, the concrete main body 110 may further include a separation wall 116 to separate the accommodating space S1 into a plurality of sub-spaces (e.g., sub-spaces S11 and S12). In some embodiments, the flame retardant layer 120 and the heat resistant layer 170 are disposed on two opposite surfaces 116a and 116b of the separation wall 116.

In some embodiments, each of the sub-space S11 and the sub-space S12 may house one or more battery systems 20 therein. In some embodiments, the battery systems 20 may be locked to one or more walls (e.g., the walls 112, 113, 114, and 115) in the sub-space S11 and one or more walls (e.g., the walls 111, 112, 114, and 115) in the sub-space S12, respectively. In some embodiments, the battery system 20 in the sub-space S11 may be locked to the separation wall 116. In some embodiments, the battery system 20 in the sub-space S12 may be locked to the separation wall 116.

According to some embodiments of the present disclosure, the design of the separation wall 116 can restrict the thernal runaway of the battery system within the single sub-space in which the battery system is disposed, such that the possibility of the flame spreading to other sub-spaces or even the interior of the entire cabinet 10 can be reduced. Therefore, the occurrence of fire accidents caused by the spread of flames can be prevented more effectively.

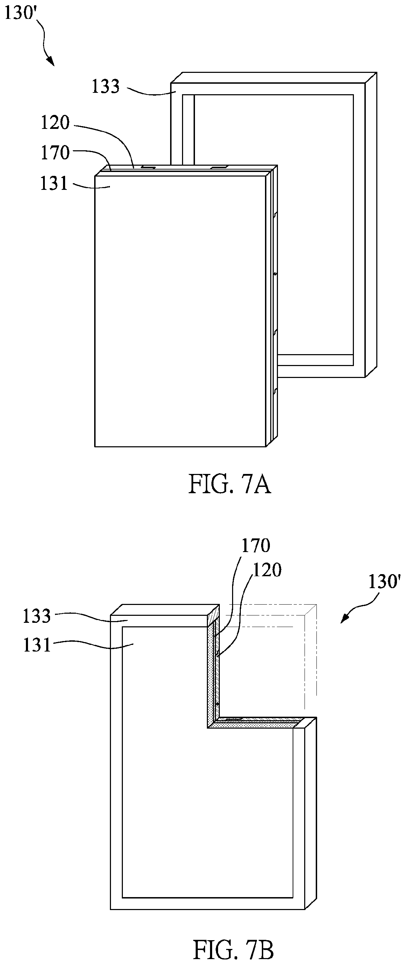

FIG. 7A is an exploded view of a door 130' of a cabinet 10 according to some embodiments of the present disclosure.

In some embodiments, a single door piece of the door 130' includes a concrete layer 131, a heat resistant layer 170, and a flame retardant layer 120. The concrete layer 131 may directly contact the heat resistant layer 170, and the heat resistant layer 170 may directly contact the flame retardant layer 120. In some embodiments, the heat resistant layer 170 may be disposed between the concrete layer 131 and the flame retardant layer 120.

FIG. 7B is a partial cross-sectional view of a door 130' of a cabinet according to some embodiments of the present disclosure.

In some embodiments, the concrete layer 131, the heat resistant layer 170, and the flame retardant layer 120 are all disposed in a door plate frame 133. The concrete layer 131, the heat resistant layer 170, and the flame retardant layer 120 may be assembled in the door plate frame 133 through snap connection, connectors (e.g., screws), or other suitable manner. In some embodiments, a total thickness of the concrete layer 131, the heat resistant layer 170, and the flame retardant layer 120 is equal to or less than a thickness of the door plate frame 133.

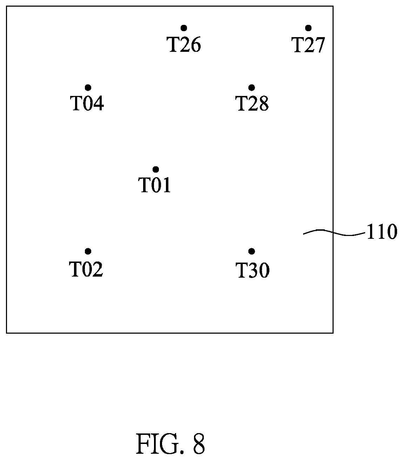

Experimental results of exemplary embodiments for further illustrating the characteristics and advantages of the flame retardant layer 120 and the heat resistant layer 170 of the cabinet according to some embodiments of the present disclosure are presented here. The structure of the cabinet in the embodiments is as shown in FIG. 4A. A flame of 1050°C is used to continuously spray and burn an internal wall surface (namely, a surface of the flame retardant layer 120) exposed to the accommodating space S1 for 30 minutes, 60 minutes, 90 minutes, and 120 minutes, and then the temperature (also referred to as the back temperature) of an external wall (namely, an outer surface of a wall of a concrete main body) of the cabinet is measured at the times, respectively. Table 1 presents the back temperatures (°C) of a plurality of measurement locations in embodiments 1 and 2. In the embodimentE1, a heat resistant layer 170 with a thickness of 2.5 centimeters and a flame retardant layer 120 with a thickness of 5 centimeters are used. In the embodiment E2, a heat resistant layer 170 with a thickness of 1 centimeter and a flame retardant layer 120 with a thickness of 4 centimeters are used. The thickness of the wall of the concrete main body 110 is 2.5 centimeters, a material of the heat resistant layer 170 is bio soluble fiber (AES) wool, and a material of the flame retardant layer 120 is an AES plate. In both the embodiment E1 and the embodiment E2, the flame retardant layer 120 and the heat resistant layer 170 are locked to the wall of the concrete main body through the aforesaid locking mechanism 30, and a heat resistant sealing structure is disposed in both embodiments. FIG. 8 is a schematic diagram of the back temperature measurement locations according to some embodiments of the present disclosure. A measurement location T01 is a location close to a center of a wall, and measurement locations T02, T04, T28, and T30 are respectively locations of approximate center points of connection lines between the location T01 and four corners of the wall. "AVG" represents an average temperature of the aforesaid five points, and "MAX" represents a measured maximum back temperature and a corresponding location.

**Table 1**

| | | T01 | T02 | T04 | T28 | T30 | AVG | MAX |
|---|---|---|---|---|---|---|---|---|
| 30 min | E1 | 25.0 | 24.7 | 26.9 | 27.1 | 28.3 | 26.4 | 28.3 (T30) |
| | E2 | 25.4 | 27.2 | 31.1 | 37.0 | 31.9 | 30.5 | 38.6 (T26) |
| 60 min | E1 | 40.4 | 39.5 | 45.4 | 42.5 | 41.3 | 41.8 | 47.7 (T26) |
| | E2 | 55.0 | 71.0 | 84.7 | 96.8 | 81.4 | 77.8 | 96.8 (T28) |
| 90 min | E1 | 60.9 | 59.3 | 64.8 | 61.6 | 63.8 | 62.1 | 77.5 (T26) |
| | E2 | 77.7 | 99.0 | 121.0 | 136.6 | 112.6 | 109.4 | 136.6 (T28) |
| 120 min | E1 | 82.1 | 78.8 | 88.6 | 79.5 | 79.0 | 81.6 | 105.6 (T26) |
| | E2 | 97.1 | 128.4 | 157.6 | 155.1 | 146.9 | 137.0 | 160.7 (T27) |

Table 2 further presents experimental results of embodiments E1 to E5. The differences among the embodiments E1 to E5 are combinations of the flame retardant layer 120 and the heat resistant layer 170 with different thicknesses. Table 2 presents an average temperature (after continuous spraying and burning for 120 minutes) of the back temperatures measured at a plurality of measurement locations in the embodiments E1 to E5. A length of the locking mechanism 30 is 8 centimeters, and an average start temperature at each measurement location is 35°C.

**Table 2**

| | Thickness (centimeter) of the flame retardant layer 120 | Thickness (centimeter) of the heat resistant layer 170 | AVG (°C) |
|---|---|---|---|
| E1 | 5 | 2.5 | 90∼100 |
| E2 | 4 | 1 | 130∼140 |
| E3 | 2.5 | 2.5 | 160∼170 |
| E4 | 2.5 | 1 | 190∼200 |
| E5 | 2.5 | 0.2∼0.5 | 220∼240 |

According to the specification of CNS 12514, the average temperature of a temperature measurement surface is required to be less than "room temperature + 140°C", and the maximum temperature of a single point on the temperature measurement surface is required to be less than "room temperature + 180°C". As shown in Table 1 and Table 2, when the average start temperature 35°C at the measurement location is defined as the room temperature, then the aforesaid specification is satisfied as long as the average temperature of the temperature measurement surface is less than 175°C and the maximum temperature of the single point on the temperature measurement surface is less than 215°C. According to the results of Table 1 and Table 2, as long as the thickness of the heat resistant layer 170 is greater than 0.5 centimeters, the specification of the CNS 12514 can be satisfied regardless of the flame retardant layer 120 with various thicknesses being used.

In addition, when a use region is an outdoor space, the room temperature may be lower than 35°C. That is, if the room temperature is defined as a relatively low temperature 14.5°C, the aforesaid specification is satisfied as long as the average temperature of the temperature measurement surface is less than 154.5°C and the maximum temperature of the single point on the temperature measurement surface is less than 194.5°C. According to the results of Table 1 and Table 2, as long as a heat resistant layer 170 with a thickness greater than 1 centimeter and a flame retardant layer 120 with a thickness greater than 4 centimeters are used together, the specification of the CNS 12514 can be satisfied. According to the above results, the cabinet according to some embodiments of the present disclosure can confine the high-temperature flame and high heat generated by thermal runaway of a lithium battery inside the cabinet, and thus the cabinet has good features of fire prevention, flame retardance, and heat resistance.

As used herein, terms "approximately", "substantially", "basically", and "about" are used for describing and explaining a small variation. When being used in combination with an event or circumstance, the term may refer to a case in which the event or circumstance occurs precisely, and a case in which the event or circumstance occurs approximately. For example, when being used in combination with a value, the term may refer to a variation range less than or equal to ±10% of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between the two values is less than or equal to ±10% of an average of the values, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%, then the two values can be considered "substantially" or "approximately" the same. For example, being "substantially" parallel may refer to an angular variation range less than or equal to ±10° with respect to 0°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, being "substantially" perpendicular may refer to an angular variation range less than or equal to ±10° with respect to 90°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

If a displacement between two surfaces is not more than 5 µm, not more than 2 µm, not more than 1 µm, or not more than 0.5 µm, the two surfaces may be considered to be coplanar or substantially coplanar.

As used herein, the terms "conductive", "electrically conductive", and "electrical conductivity" refer to an ability to transport an electric current. Electrically conductive materials typically indicate those materials that exhibit little or no resistance to the flow of an electric current. One measure of electrical conductivity is Siemens per meter (S/m). Typically, an electrically conductive material is a material having a conductivity greater than approximately 10⁴ S/m (for example, at least 10⁵ S/m or at least 10⁶ S/m). The electrical conductivity of a material may sometimes vary with a temperature. Unless otherwise specified, the electrical conductivity of the materials is measured at a room temperature.

As used herein, singular terms "a", "an", and "the" may include a plurality of referents unless the context clearly dictates otherwise. In the description of some embodiments, assemblies provided "on" or "above" another assembly may encompass a case in which a former assembly is directly on a latter assembly (for example, in physical contact with the latter assembly), and a case in which one or more intermediate assemblies are located between the former assembly and the latter assembly.

Although the present disclosure has been described and illustrated with reference to specific embodiments thereof, these descriptions and illustrations do not limit the present disclosure. It should be understood by those skilled in the art that various changes may be made and equivalents may be substituted without departing from the true spirit and scope of the present disclosure as defined by the appended claims. The drawings may not be necessarily drawn to scale. There may be a difference between a process rendition in the present disclosure and an actual device due to a variable in a manufacturing program and the like. There may be other embodiments of the present disclosure that are not specifically shown. The specification and drawings are to be regarded as illustrative rather than restrictive. Modifications may be made to adapt a particular situation, material, composition of matter, method, or program to the objective, spirit, and scope of the present disclosure. All such modifications are intended to be within the scope of the patent claims appended hereto. Although the methods disclosed herein have been described with reference to particular operations performed in a particular order, it may be understood that these operations may be combined, sub-divided, or reordered to form an equivalent method without departing from the teachings of the present disclosure. Therefore, unless otherwise specifically indicated herein, the order and grouping of operations shall not be construed as any limitation on the present disclosure.

## Claims

1. A cabinet (10) for an energy storage apparatus, **characterized in**
**that**, the cabinet comprises:
a concrete main body (110) comprising a plurality of walls (111, 112, 113, 114, 115) to form an accommodating space (S1);
a heat resistant layer (170) disposed on one or more inner surfaces (111a, 112a, 113a, 114a, 115a) of the plurality of walls in the accommodating space; and
a flame retardant layer (120) disposed on the heat resistant layer and exposed to the accommodating space, wherein a volumetric density of the heat resistant layer is lower than a volumetric density of the flame retardant layer.

2. The cabinet according to claim 1, further comprising:
a locking member (310) penetrating the heat resistant layer and an opening (120H) of the flame retardant layer and locked to the concrete main body; and
a heat resistant structure (320, 180, 182) covering the opening of the flame retardant layer and exposed to the accommodating space.

3. The cabinet according to claim 2, wherein the heat resistant
structure comprises:
a heat resistant locking member (320) locked to the locking member; and
a heat resistant sealing structure (180, 182) covering the locking member and filled in at least one space between the opening and the locking member.

4. The cabinet according to claim 3, wherein the heat resistant sealing structure comprises:
a heat resistant filler (180) covering and contacting the locking member; and
a heat resistant paste (182) covering and contacting the heat resistant filler.

5. The cabinet according to claim 2, wherein the concrete main body comprises a protruding structure (110P) protruding from at least one outer surface of the plurality of walls, and the locking member (310) extends into the protruding structure.

6. The cabinet according to claim 1, further comprising a locking mechanism (30) locking the heat resistant layer and the flame retardant layer to the concrete main body, wherein the locking mechanism comprises at least a heat resistant material.

7. The cabinet according to claim 6, wherein the locking mechanism comprises a stud (310) and a nut (320), the stud screws and locks the flame retardant layer, the heat resistant layer, and the concrete main body, the nut is screwed to the stud and abuts against the flame retardant layer, and the nut comprises the heat resistant material.

8. The cabinet according to claim 7, wherein an end portion (310a) of the stud passes through a screw hole (320H) of the nut, and the cabinet further comprises a heat resistant filler (180) covering the end portion.

9. The cabinet according to claim 8, further comprising a heat resistant protection layer (182) covering the heat resistant filler and exposed to the accommodating space.

10. The cabinet according to claim 1, wherein a heating linear shrinkage rate of the heat resistant layer (170) is lower than a heating linear shrinkage rate of the flame retardant layer (120).

11. The cabinet according to claim 1, further comprising a door (130) pivotally connected to a side edge (1171, 1172) of an opening (117) of the concrete main body, wherein the door comprises a concrete layer 131, the flame retardant layer is further disposed on the concrete layer of the door, and the heat resistant layer (170) is further disposed between the flame retardant layer (120) and the concrete layer (131).

12. The cabinet according to claim 1, wherein the flame retardant layer comprises a plurality of flame retardant plates (121, 122, 123, 124, 125, 126, 127, 128, 129, 129A, 129B, 129C) continuously connected to each other, and at least one connection interface (120S, 120S') between the flame retardant plates is a non-planar surface.

13. The cabinet according to claim 12, wherein the at least one connection interface between the flame retardant plates has a stepped section cross-sectional profile.

14. The cabinet according to claim 12, wherein the flame retardant plates comprise a first flame retardant plate (121) and a second flame retardant plate (122), a first side surface (1211) of the first flame retardant plate comprises a first stepped structure, a first side surface (1221) of the second flame retardant plate comprises a second stepped structure, and the first stepped structure is engaged with the second stepped structure to connect the first flame retardant plate and the second flame retardant plate.

15. The cabinet according to claim 12, wherein the flame retardant plates comprise a first flame retardant plate (121), a second flame retardant plate (122), and a third flame retardant plate (123), and a first connection interface (120S') between the first flame retardant plate (121) and the second flame retardant plate (122) and a second connection interface (120S) between the first flame retardant plate (121) and the third flame retardant plate (123) are adjacent to each other and are both non-planar surfaces.
